# EUROPÄISCHE PATENTANMELDUNG

(11) **EP 1 418 652 A1**
(43) Veröffentlichungstag der Anmeldung: **12.05.2004**
(21) Anmeldenummer: 03021589.1
(22) Anmeldetag: 25.09.2003
(51) Int. Cl.: H01R 13/73

(54) **Befestigungsvorrichtung für Steckverbinder**

(30) Priorität: 09.11.2002 DE 20217273 U
(71) Anmelder: Harting Electric GmbH & Co. KG, 32339 Espelkamp (DE)
(72) Erfinder: Rüter, Andreas, 32369 Rahden (DE)

(57) **Zusammenfassung**

Für eine schnelle und einfache Befestigung eines Steckverbinderkörpers in einem Trägerkörper, der zur Verrastung in einem Schaltschrank o. ä. vorgesehen ist, wird eine Befestigungseinrichtung vorgeschlagen, die ohne jegliches Werkzeug eine sichere Fixierung des Steckverbinderkörpers gewährleistet.

## Beschreibung

Die Erfindung betrifft eine Einrichtung zur Befestigung von Steckverbindern in einem Trägerkörper, insbesondere Befestigungseinrichtung für einen Steckverbinderkörper an einem U-förmigen Trägerkörper mittels Winkelelementen, in denen der Steckverbinderkörper mittels einer Halterung gehalten ist, wobei in der Halterung stiftförmige Befestigungselemente angeordnet sind.

Eine derartige Haltevorrichtung wird benötigt, um Steckverbinder-Kontakteinsätze, die in einem Halterahmen gehalten sind, mit einem Trägergehäuse zu verbinden.

In der DE 299 08 490 U1 ist ein Haltesystem für verschiedene Typen Steckverbinder gezeigt, bei dem Seitenteile an einen ersten Isolierkörper, der unterschiedlichen Längen aufweisen kann, befestigbar sind, die an einer Grundplatte mit einem festen und einem verschiebbaren Halter verrastbar sind.

Es sind weiterhin Haltesysteme für Steckverbinder bekannt, bei denen eine den Steckverbinder haltende Grundplatte an einer Kontakteinsatz-Halterung mittels Schrauben gehalten wird, wobei jedoch für die Befestigung stets ein Werkzeug benötigt wird.

Der Erfindung liegt daher die Aufgabe zugrunde, eine Befestigungsvorrichtung der eingangs genannten Art dahingehend auszubilden, dass für die Montage von Kabelverbindungen mittels Steckverbindungen in einem Schaltschrank eine möglichst einfache und schnelle Fixierung eines Steckverbinderkörpers in einem Trägergehäuse mittels einer werkzeuglosen Befestigungsmöglichkeit erfolgen soll, die leicht zu montieren und zu demontieren und kostengünstig zu fertigen ist.

Diese Aufgabe wird dadurch gelöst, dass in den Eckbereichen der Winkelelemente Schlitze vorgesehen sind, in die die Halterung einfügbar ist, dass unterhalb der Schlitze axial zu den Befestigungselementen der Halterung Pfosten vorgesehen sind, wobei die Pfosten beabstandet zur Unterkante der Schlitze angeordnet sind, dass die Pfosten in Längsrichtung eine durchgehende Öffnung aufweisen, dass in die Öffnung ein Klemmelement einschiebbar ist, wobei das Klemmelement eine Längsbohrung aufweist, wobei beim Einschieben des Klemmelementes in Richtung zum Steckverbinderkörper die Enden der stiftförmigen Befestigungselemente in die Längsbohrung eingreifen, und dass das Klemmelement mit Rastmitteln versehen ist, die eine Vormontage- und eine Endstellung der Klemmelemente ermöglichen.

Vorteilhafte Ausgestaltungen der Erfindung sind in den Ansprüchen 2 - 8 angegeben.

Die mit der Erfindung erzielten Vorteile bestehen insbesondere darin, dass ein Steckverbinderkörper, der später mit einem Gegenstecker gesteckt werden soll, zunächst werkzeuglos in einen Trägerkörper einsetzbar ist, der auf einer sogenannten Hutschiene z. B. in einem Schaltschrank montiert ist. Dabei ist von besonderem Vorteil, dass jegliche Montageteile in diesem System unverlierbar gehalten sind.

An dem beiden Befestigungsseiten des Steckverbinderkörpers sind mit Schrauben versehene Metallhalterungen angefügt, die jeweils in ein Winkelelement eingeschoben werden, wobei eine Arretierung vorgesehen ist, die eine feste Verbindung bewirkt.

Dazu wird die Metallhalterung zunächst in einen durch zwei Anformungen gebildeten Schlitz in den Eckbereichen des Winkelelementes eingeschoben, wobei gleichzeitig die Schraubenenden in eine durchgehende Öffnung in einem Pfosten hineinragen, der unterhalb des Schlitzes angeordnet ist.

Daraufhin wird ein in dem Pfosten verschiebbares Klemmelement in Richtung der Schraubenenden verschoben und verrastet, so dass die Winkelelemente fest mit dem Steckverbinderkörper verbunden sind.

Das Klemmelement ist vorteilhafterweise mit Rastmitteln im Pfosten gehalten, so dass zwei Raststellungen vorgesehen sind:
a) eine Vormontagestellung, bei der das länglich ausgebildete Klemmelement in dem Pfosten in einer unteren Stellung vorverrastet ist und dabei mit einem Teil des Klemmelementkörpers noch unterhalb des Winkelelementes hervorragt, und
b) eine Endstellung, bei der das Klemmelement über ein Schraubenende geschoben und verrastet ist und mit dem unteren Teil des Winkelelementes abschließt.
Vorteilhafterweise können an Stelle der Schrauben auch preisgünstiger herstellbare Befestigungselemente, etwa Stifte oder Bolzen in die Metallhalterungen eingesetzt werden, wobei eine verliersichere Montage vorgesehen ist.

Damit ein gewisser Toleranzbereich unterschiedlicher Blechdicken bei den Metallhalterungen genutzt werden kann, ist in dem Schlitz zwischen den beiden Anformungen vorteilhaft eine Klemmzunge vorgesehen, die die Metallhalterung stets gegen die der Klemmzunge entgegengesetzte Anformung drückt.

Der mit den Winkelelementen versehene Steckverbinderkörper wird anschließend in den Trägerköper eingesetzt, wobei vorteilhafterweise an dem Winkelelement angeformte, seitlich ausstehende Zapfen in entsprechende Ausnehmungen in den Seitenteilen des Trägerkörpers einschiebbar und verrastbar sind.

Dabei ist eine der Ausnehmungen waagrecht ausgeführt und erlaubt nach dem Einschieben ein Halten und Verschwenken des Steckverbinderkörpers, so dass dieser vorteilhaft in eine günstige Stellung, für eine Bestückung der anzuschließenden elektrischen Leiter gedreht werden kann.

Während die andere Ausnehmung mit einer leichten Schräge gegenüber der Senkrechten zum Steckverbinderkörper hin ausgeführt ist, in die das zweite Winkelelement beim Absenken des Steckverbinderkörpers in die Waagrechte, mit den seitlichen Zapfen eingesetzt wird.

Mit einem einfachen Verrastungsmechanismus, mittels einer Klinknase an einem der Winkelelemente, die an einer Verrastungsnase an einem Klinkenmechanismus am Trägerkörper verrastet, werden Steckverbinderkörper und Trägerkörper lösbar zusammengehalten.

Ein Ausführungsbeispiel der Erfindung ist in der Zeichnung dargestellt und wird im folgenden näher erläutert. Es zeigen:
- Fig. 1: eine perspektivische und auseinandergezogene Darstellung eines Steckverbinderkörpers mit einer Befestigungseinrichtung an einem Trägerkörper,
- Fig. 2: eine perspektivische Darstellung eines Eckbereiches eines Winkelelementes,
- Fig. 3: eine Schnittansicht aus dem Eckbereich des Winkelelementes mit einem vormontierten Klemmelement,
- Fig. 4: eine Schnittansicht aus dem Eckbereich des Winkelelementes mit einem Klemmelement in Endstellung, und
- Fig. 5: eine detaillierte, perspektivische Ansicht des Eckbereiches mit einem Klemmelement in Endstellung.

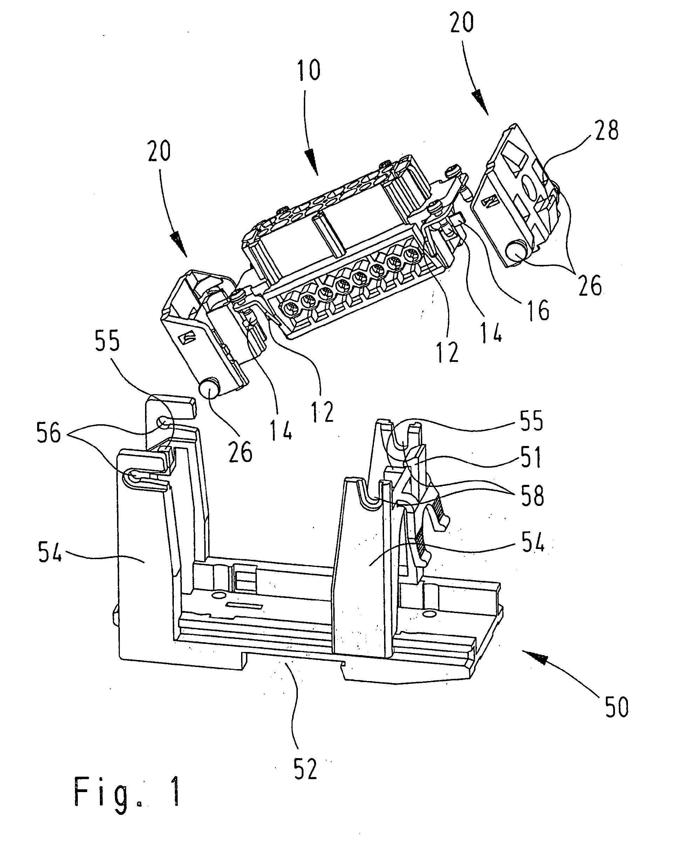

Die Fig.1 zeigt in einer auseinandergezogenen Darstellung einen Steckverbinderkörper 10 mit zwei Winkelelementen 20 und einem Trägerkörper 50. An den Außenseiten des Steckverbinderkörpers sind winkelförmige, elektrisch leitende Halterungen 12 angeordnet an denen zumindest eine Verschraubung für einen Schutzerdeanschluss 16 vorgesehen ist.

Weiterhin sind in den Eckbereichen der Halterung 12 Befestigungselemente 14 vorgesehen, die als unverlierbare Klemmschrauben, Stifte oder Bolzen ausgebildet sein können.

Die in diesem Beispiel vorgesehenen Klemmschrauben sind zwar locker aber unverlierbar in den Halterungen 12 gehalten.

Beidseitig des Steckverbinderkörpers sind Winkelelemente 20 vorgesehen, die jeweils auf die Halterungen 12 aufschiebbar sind.

Die Winkelelemente sind wiederum mit nach außen weisenden Zapfen 26 versehen, die in Rastausnehmungen 56, 58 in Seitenteilen 54 des Trägerkörpers 50 einsetzbar sind.

Der Trägerkörper 50 ist zur Halterung in einem Schaltschrank oder ähnlichem mit einer Rasthalterung 52 zum Einsatz auf sogenannten Hutschienen versehen.

Aus dieser Darstellung ist auch ein weiterer Vorteil dieser Konstruktion zu ersehen, dass nämlich ein zunächst mit den Zapfen 26 in den Rastausnehmungen 56 eingefügter Steckverbinderkörper so weit verschwenkt werden kann, dass eine bequeme Verdrahtung der einzelnen im Steckverbinderkörper gehaltenen elektrischen Kontakte vorgenommen werden kann. Anschließend wird der Steckverbinderkörper in die Waagrechte zwischen die beiden übrigen Seitenteile 54 verschwenkt und in den Rastausnehmungen 58 eingefügt.

Verrastet wird die Kombination von Steckverbinderkörper und den Winkelelementen mittels einer Klinknase 28 an einem der Winkelelemente 20 an einer Verrastungsnase 51, die an einem Klinkenmechanismus am Trägerkörper 50 angeformt ist.

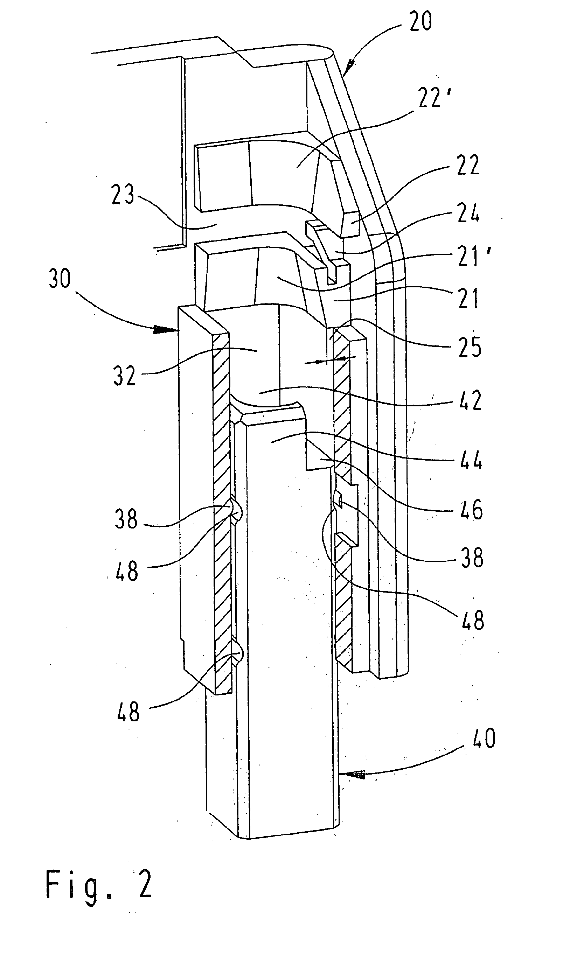

In der Fig. 2 ist in einer Detailzeichnung einer der Eckbereiche des Winkelelementes 20 gezeigt, wobei in einem Pfosten 30, mit einer axialen, durchgehenden Öffnung 32 ein Klemmelement 40 angeordnet ist.

Die hier gezeigte Position entspricht der eines vormontierten Winkelelementes.

Das im Querschnitt quadratisch geformte, längliche Klemmelement 40 weist eine innen verlaufende Längsbohrung 42 auf und an zwei gegenüberliegenden Außenseiten halbrunde Rillen 48, in die jeweils eine halbrundförmige Erhebung 38 an der Innenwand des Pfostens 30 zur Verrastung des Klemmelementes eingreift.

Weiterhin ist das in Schieberichtung weisende Ende des Klemmelementes 40 mit einer Eckanformung 44 versehen, die über eine zwei Seitenwände einschließende Ecke hinweg und verlängert gegenüber dem übrigen quadratischen Klemmelement, ausgeführt ist.

Da die Längsbohrung 42 durch das Klemmelement 40 verläuft, weist die Innenseite der Eckanformung 44 eine zylinderförmige Wandfläche auf, die insgesamt etwas mehr als einen Viertelzylinder umfasst.

Oberhalb des Klemmelementes ist in dem Eckbereich des Winkelelementes 20 eine über die zwei Eckseiten reichende erste Anformung 21 angeordnet, deren zum Klemmelement weisende Seite einen Überstand 25 gegenüber der Wandung des Pfostens 30 aufweist.

Die Wandfläche 21' der ersten Anformung 21 ist schräg bzw. kegelförmig ausgeführt, mit dem größeren Durchmesser zum Klemmelement 40 weisend.

In dieser Darstellung gleichfalls zu erkennen, ist oberhalb der ersten Anformung eine weitere, durch einen Schlitz 23 getrennte, etwa einen Viertelkreis umfassende zweite Anformung 22 vorgesehen, deren Wandfläche 22' ebenfalls kegelförmig ausgeführt ist, wobei der größere Kegeldurchmesser jedoch nach Außen (hier nach oben) weist.

In dem Schlitz 23 ist eine Klemmzunge 24 angeordnet, die aus der ersten Anformung 21 heraus an der Innenwand des Winkelelementes entlang zur zweiten Anformung 22 weist ohne diese jedoch zu berühren.

Die Klemmzunge 24 ist vorgesehen, um Halterungen 12 mit unterschiedlichen Materialstärken beim Einsetzen in das Winkelelement 20 fest zu halten und vor allem im endmontierten Zustand ein Verrutschen oder Vibrieren des Steckverbinderkörpers zu vermeiden.

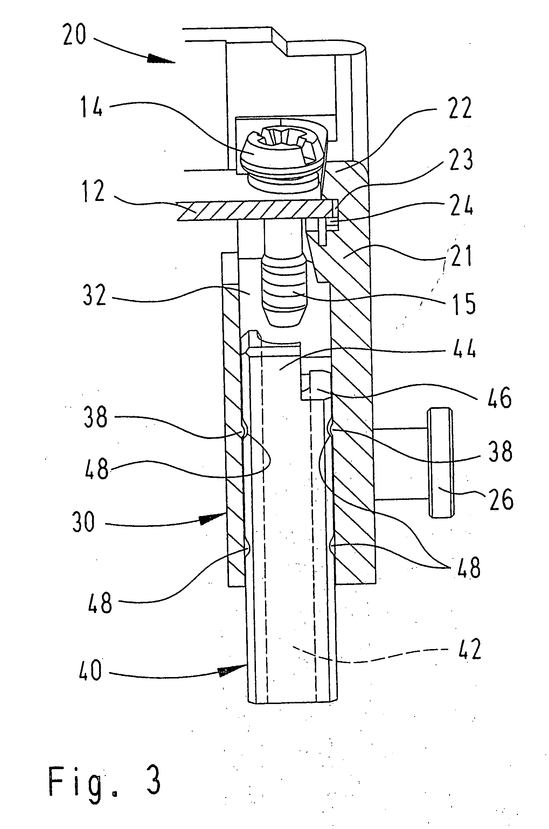

In der Fig. 3 ist in einer weiteren detaillierten Darstellung des Eckbereiches gezeigt, wie die Halterung 12 für den Steckverbinderkörper in den Schlitz 23 zwischen die beiden Anformungen 21, 22 eingeschoben ist.

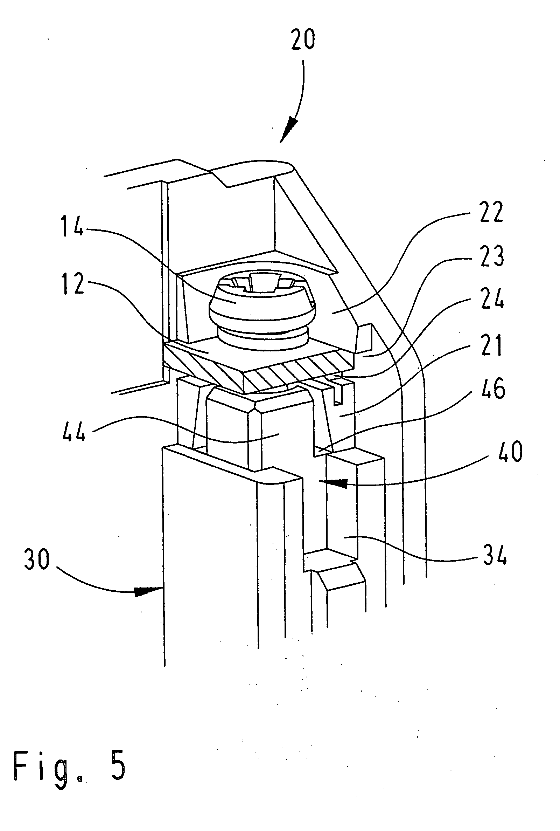

Dabei ist für einen einfachen Einsetzvorgang der Halterung, bzw. der darin gehaltenen Befestigungselemente 14, in der Wandung des Pfostens 30 eine Längsausnehmung 34 (siehe Fig. 5) vorgesehen, so dass zunächst das unterhalb der Halterung herausragende Ende 15 des Befestigungselementes, seitlich in den Pfosten einfügbar ist, bis die Halterung 12 in den jeweiligen Schlitz 23 eingetaucht ist.

Dabei ist die Längsbohrung 42 des Klemmelementes 40 unmittelbar unterhalb des Endes des Befestigungselementes 14 positioniert.

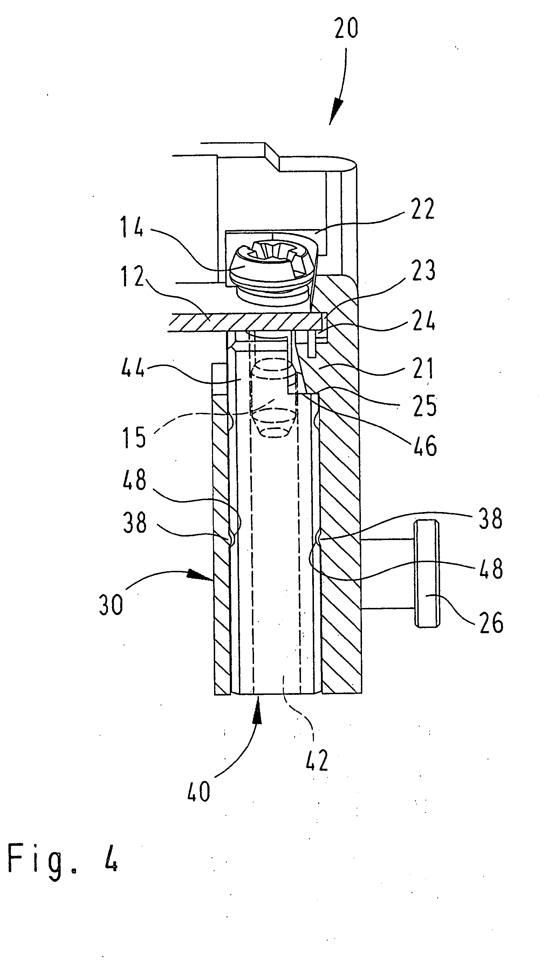

In der Fig. 4 ist in Folge zu der Fig. 3 gezeigt, wie das Klemmelement 40 bereits in Richtung der Halterung 12 verschoben ist, wobei das Befestigungselement 14 in die Längsbohrung 42 eingreift und mit dem Verrasten der Erhebungen 38 in den Rillen 48 des Klemmelementes 40 der Steckverbinderkörper endgültig in dem Winkelement 20 gesichert ist.

Das Einschieben der in der Montagestellung aus dem Winkelelement vorstehenden Klemmelemente 40 kann entweder mit der Hand erfolgen oder in dem der Steckverbinderkörper 10 mit den Winkelelementen 20 auf eine plane Unterlage gedrückt wird, so dass die in den Eckbereichen vorgesehenen und noch herausragenden Klemmelemente 40 aus der unteren Vormontagestellung, wie in Fig. 3 gezeigt, in die obere Endstellung verschoben werden. In der Endstellung schlägt das Klemmelement 40 mit der Absatzfläche 46 an den überstehenden Teil 25 der ersten Anformung 21 an, wobei das eingedrückte Ende des Klemmelementes mit dem Winkelelement bündig abschließt.

Spätestens jedoch bei der Verrastung des Steckverbinderkörpers bzw. der Zapfen 26 der Winkelelemente 20 in den Rastausnehmungen 56 müssen die Klemmelemente 40 mittels der an den Innenseiten der Seitenteile 54 angeordneten Anformungen 55 (siehe auch Fig.1) in ihrer Endstellung in den Pfosten 30 fixiert sein. Während beim Einschwenken des Winkelelementes 20 in die Rastausnehmungen 58, die Klemmelemente zwangsläufig gegen die Anformungen 55 eingedrückt und verrastet werden.

Die Fig. 5 zeigt in einer perspektivischen Darstellung den Eckbereich des Winkelelementes 20 mit einer bereits eingefügten und verrasteten Halterung 12 eines Steckverbinderkörpers.

Aus der Halterung ragt der Schraubkopf einer als Klemmschraube vorgesehenen Befestigungselementes 14 heraus, dessen hier nicht mehr sichtbare, untere mit einem Gewindeabschnitt versehene Enden 15 bereits untere mit einem Gewindeabschnitt versehene Enden 15 bereits in die Längsbohrung 42 des Klemmelementes 40 eingetaucht und somit fixiert ist. Gut zu erkennen ist, dass die Halterung 12 mittels der nur noch teilweise ersichtlichen Klemmzunge 24 an der Unterkante der (oberen) zweiten Anformung 22 anliegt.

Ebenso ist die Funktionalität der Längsausnehmung 34 im Pfosten 30 ersichtlich, so dass ein im Winkelelement einzufügender Steckverbinderkörper, nicht wie bei einer Schraubverbindung von oben einzusetzen ist, sondern einfach seitlich in die Eckbereiche des Winkelelementes in den Schlitz 23 zwischen der ersten und zweiten Anformung 21, 22 einschiebbar ist, dabei von den Klemmzungen 24 festgehalten wird, bis das Klemmelement 40 im Pfosten 30 in seine Endstellung geschoben ist und dort verrastet.

## Patentansprüche

1. Einrichtung zur Befestigung von Steckverbindern in einem Trägerkörper, insbesondere Befestigungseinrichtung für einen Steckverbinderkörper (10) an einem U-förmigen Trägerkörper (50) mittels Winkelelementen (20), in denen der Steckverbinderkörper mittels einer Halterung (12) gehalten ist, wobei in der Halterung stiftförmige Befestigungselemente (14) angeordnet sind, **dadurch gekennzeichnet, dass** in den Eckbereichen der Winkelelemente (20) Schlitze (23) vorgesehen sind, in die die Halterung (12) einfügbar ist,
dass unterhalb der Schlitze (23) axial zu den Befestigungselementen (14) der Halterung (12) Pfosten (30) vorgesehen sind, wobei die Pfosten beabstandet zur Unterkante der Schlitze angeordnet sind,
dass die Pfosten (30) in Längsrichtung eine durchgehende Öffnung (32) aufweisen,
dass in die Öffnung (32) ein Klemmelement (40) einschiebbar ist, wobei das Klemmelement eine Längsbohrung (42) aufweist, wobei beim Einschieben des Klemmelementes (40) in Richtung zum Steckverbinderkörper die Enden (15) der stiftförmigen Befestigungselemente (14) in die Längsbohrung (42) eingreifen, und
dass das Klemmelement (40) mit Rastmitteln versehen ist, die eine Vormontage- und eine Endstellung der Klemmelemente ermöglichen.

2. Befestigungseinrichtung nach Anspruch 1, **dadurch gekennzeichnet, dass** die Rastmittel durch halbrundförmige Erhebungen (38) in der Öffnung (32) des Pfostens (30), die in beabstandete Rillen (48) im Klemmelement (40) eingreifen, gebildet sind.

3. Befestigungseinrichtung nach Anspruch 1 oder 2, **dadurch gekennzeichnet,**
**dass** das Klemmelement (40) in Schieberichtung eine stufenförmige Eckanformung (44) aufweist.

4. Befestigungseinrichtung nach einem oder mehreren der vorstehenden Ansprüche, **dadurch gekennzeichnet,**
**dass** die Schlitze (23) jeweils durch zwei beabstandet angeordnete Eckanformungen (21, 22) an den Winkelelementen (20) gebildet sind.

5. Befestigungseinrichtung nach Anspruch 4, **dadurch gekennzeichnet, dass** an der ersten Anformung (21) eine federnde Klemmzunge (24) angeformt ist, die gegen die zweite Anformung (22) gerichtet ist.

6. Befestigungseinrichtung nach einem oder mehreren der vorstehenden Ansprüche, **dadurch gekennzeichnet,**
**dass** die Wandung des Pfostens (30) eine Längsausnehmung (34) aufweist, durch die die Enden der Befestigungselemente (14) seitlich in den Pfosten einfügbar sind.

7. Befestigungseinrichtung nach einem oder mehreren der vorstehenden Ansprüche, **dadurch gekennzeichnet,**
**dass** der Trägerkörper (50) Schlitze (56, 58) aufweist in denen der Steckverbinderkörper (10) mit seitlich aus den Winkelelementen (20) herausragenden Zapfen (26) schwenkbar und verrastbar gehalten ist.

8. Befestigungseinrichtung nach einem oder mehreren der vorstehenden Ansprüche, **dadurch gekennzeichnet,**
**dass** an den Seitenteilen (54) des Trägerkörpers (50) Anformungen (55) vorgesehen sind, die eine Endstellung der Klemmelemente (40) innerhalb der Pfosten (30) sicherstellen.
